# EUROPÄISCHE PATENTSCHRIFT

(11) **EP 2 396 257 B1**
(45) Veröffentlichungstag und Bekanntmachung des Hinweises auf die Patenterteilung: **14.11.2012**
(21) Anmeldenummer: 10701622.2
(22) Anmeldetag: 22.01.2010
(51) Int. Cl.: B65G 21/20

(54) **VERSTELLVORRICHTUNG ZUR VERWENDUNG BEI EINEM TRANSPORTEUR**
ADJUSTING DEVICE FOR USE ON A CONVEYOR
DISPOSITIF DE DÉPLACEMENT À UTILISER AVEC UN TRANSPORTEUR

(30) Priorität: 10.02.2009 DE 102009008279; 15.06.2009 DE 102009025308
(43) Veröffentlichungstag der Anmeldung: 21.12.2011
(73) Patentinhaber: KHS GmbH, 44143 Dortmund (DE)
(72) Erfinder: DERCKS, Michael, 47559 Kranenburg (DE)
(86) Internationale Anmeldenummer: PCT/EP2010/000377
(87) Internationale Veröffentlichungsnummer: WO 2010/091776

(56) Entgegenhaltungen:
- WO-A1-2005/118437
- DE-A1- 19 610 936
- DE-C1- 19 618 373
- DE-U1- 8 812 695

## Beschreibung

Die Erfindung bezieht sich auf eine Verstellvorrichtung gemäß Oberbegriff Patentanspruch 1.

Bekannt ist eine derartige Verstellvorrichtung (DE 196 18 373 C1), mit der die Lage bzw. Position von Führungselementen, welche auf einer von umlaufenden Transportbändern gebildeten Transportebene mehrere in Transportrichtung sich erstreckenden Gassen seitlich begrenzen, senkrecht zur Transportrichtung verändert werden kann, um so die Breite der Gassen an die Größe der auf der Transportebene in den Gassen transportierten Produkte oder Verpackungen anzupassen. Die bekannte Verstellvorrichtung besteht im Wesentlichen aus vier Gewindespindeln, die eine Spindelanordnung bilden, sowie aus mehreren Einteil- oder Verstellelementen, die jeweils mit einem Muttergewindestück (Stellmutter) in das Gewinde einer der Gewindespindeln eingreifen und auf einem die Spindelanordnung umschließenden, sich in Verstellrichtung erstreckenden rohrartigen Gehäuse geführt sind. Jedes Muttergewindestück ist über eine durch einen Schlitz des Gehäuses hindurchgeführte Passfeder mit einem äußeren, auf dem Gehäuse geführten Führungsstück des betreffenden Einteil- oder Verstellelementes verbunden. Nachteilig ist u.a. eine relativ aufwendige Konstruktion sowie auch die Gefahr eines Verklemmens der Einteil- oder Verstellelemente bzw. deren Führungsstücke auf dem als Führung dienenden hohlrohrartigen Gehäuse.

Aufgabe der Erfindung ist es, eine Verstellvorrichtung aufzuzeigen, die die vorgenannten Nachteile vermeidet und bei vereinfachter Konstruktion eine Verstellung ohne die Gefahr eines Verklemmens der Einteil- oder Verstellelemente ermöglicht.

Zur Lösung dieser Aufgabe ist eine Verstellvorrichtung entsprechend dem Patentanspruch 1 ausgebildet.

Weiterbildungen der Erfindung sind Gegenstand der Unteransprüche.

Die Erfindung wird im Folgenden anhand der Figuren an Ausführungsbeispielen näher erläutert. Es zeigen:
- Fig. 1: in vereinfachter Teildarstellung eine Draufsicht auf einen Transporteur zum Transportieren von Gegenständen oder Verpackungen, vorzugsweise zum Transportieren von Gegenständen oder Verpackungen innerhalb einer Verpackungsmaschine, zusammen mit einer Verstellvorrichtung zum seitlichen Verstellen von Führungselementen des Transporteurs;
- Fig. 2: eines der Einteil- oder Verstellelemente der Verstellvorrichtung der Figur 1 in Seitenansicht;
- Fig. 3: in Seitenansicht und in Einzeldarstellung verschiedene Verstellmuttern zur Verwendung bei Einteil- oder Verstellelementen entsprechend der Figur 2;
- Fig. 4 - 6: jeweils in perspektivischer Darstellung unterschiedliche Gehäuse für die Einteil- oder Verstellelemente zur Verwendung bei einer Verstellvorrichtung der Figur 1.

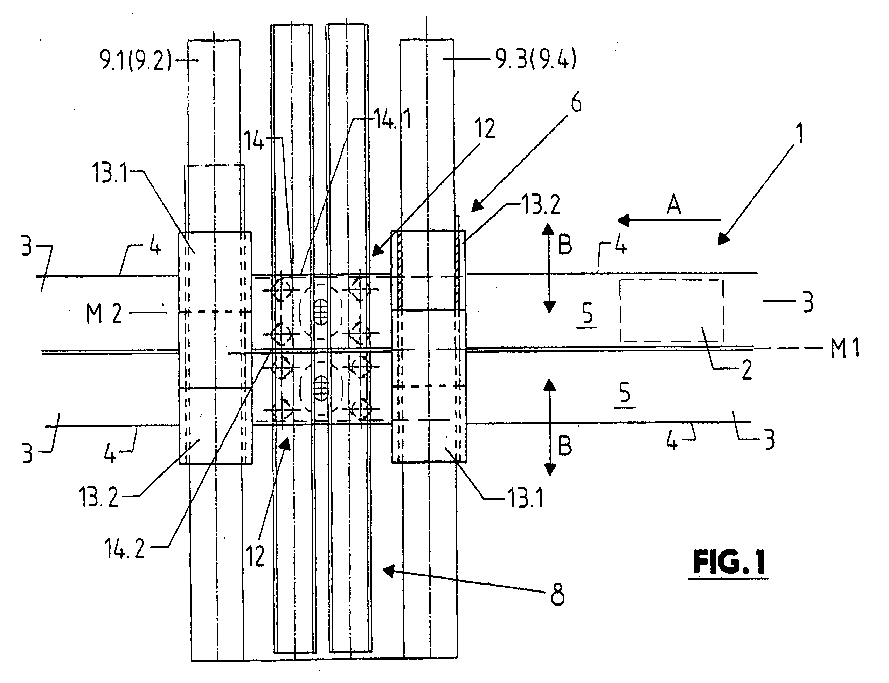

Der in den Figuren allgemein mit 1 bezeichnete Transporteur dient zum Transportieren von Gegenständen oder Verpackungen 2 in einer in der Figur 1 mit dem Pfeil A angegebenen Transportrichtung. Die Verpackungen 2 sind beispielsweise Flaschen oder andere Behälter oder Weichverpackungen oder aus Einzelverpackungen hergestellte Gebinde usw. Der Transporteur 1 besteht hierfür bei der dargestellten Ausführungsform aus mehreren, jeweils eine geschlossene Schlaufe bildenden und endlos umlaufend angetriebenen Transportbändern (z.B. Transport- oder Scharnierbandketten), die quer in Transportrichtung A aneinander anschließen und mit ihren oben liegenden Schlaufenlängen eine horizontale oder im Wesentlichen horizontale Transportfläche für die Verpackungen 2 bilden. In der Figur 1 sind der einfacheren Darstellung wegen lediglich zwei derartige Transportbänder 3 gezeigt, die eine seitlich durch zwei Gassen-Führungen 4 begrenzte Gasse 5 des Transporteurs 1 bilden, in der (Gasse) die Verpackungen 2 in Transportrichtung A aufeinander folgend transportiert werden. Tatsächlich weist der Transporteur 1 mehrere derartige Gassen 5 auf, die parallel zur Transportebene und senkrecht zur Transportrichtung gegeneinander versetzt sind und jeweils aus der von den Transportbändern 3 bestimmten Transportebene und den über der Transportebene angeordneten seitlichen Führungen 4 bestehen. Zur Anpassung der Breite der Gassen 5 an die Abmessungen, die die Verpackungen 2 in der Achsrichtung quer zur Transportrichtung A aufweisen, sind die Führungen 4 seitlich verstellbar, wie dies in der Figur 1 mit den Doppelpfeilen B angedeutet ist. Für diese seitliche Verstellung der Führungen 4 sämtlicher Gassen 5 dienen Verstelleinrichtungen 6, die in Transportrichtung A aufeinander folgend vorgesehen sind, und zwar oberhalb der von den Transportbändern 3 gebildeten Transportebene und dabei oberhalb der Bewegungsbahn der Verpackungen 2 auf dieser Transportebene. Der einfacheren Darstellung wegen ist in der Figur 1 lediglich eine derartige Verstellvorrichtung 6 gezeigt.

Die Verstellvorrichtung 6 umfasst bei der dargestellten Ausführungsform mehrere Gewindespindeln 7.1 - 7.6, die mit ihren Achsen parallel zueinander, horizontal und senkrecht zur Transportrichtung A orientiert sind. Die Gewindespindeln 7.1 - 7.6 sind jeweils beidendig in nicht dargestellten Lagern an einem Maschinengestell drehbar gelagert. Weiterhin sind die Gewindespindeln 7.1 - 7.6 derart angeordnet, dass sie zwei Gruppen mit jeweils drei Gewindespindeln 7.1, 7.2, 7.3 bzw. 7.4, 7.5, 7.6 bilden, wobei diese Gruppen von Spindeln in horizontaler Richtung nebeneinander angeordnet sind, sodass die Achsen der Spindeln jeder Spindelgruppe in einer gemeinsamen Ebene E1 bzw. E2 angeordnet sind, die senkrecht zur Transportebene des Transporteurs 1 orientiert ist. Die Achse jeder Spindel einer Spindelgruppe ist mit der Achse der entsprechenden Spindel der anderen Spindelgruppe in einer gemeinsamen horizontalen Ebene angeordnet. Die Spindeln 7.1 - 7.6 bzw. die Spindelgruppen bilden eine in den Figuren allgemein mit 8 bezeichnete Spindelanordnung.

Die Gewindespindeln 7.1 - 7.6 sind bei der dargestellten Ausführungsform weiterhin so ausgebildet, dass sie an einer Seite einer vertikalen Mittelebene M, die die Transportrichtung einschließt und senkrecht zur Transportebene angeordnet ist, mit einem Rechtsgewinde und an der anderen Seite dieser Mittelebene M1 jeweils mit einem Linksgewinde ausgeführt sind.

Die Verstellvorrichtung 6 umfasst weiterhin vier Führungsstangen 9.1 - 9.4, die jeweils mit ihren Achsen parallel zueinander und parallel zu den Achsen der Spindeln 7.1 - 7.6 angeordnet sind und damit in einer Achsrichtung senkrecht zur Transportrichtung A und parallel zu der Transportebene des Transportsystems 1. Die Führungsstangen 9.1 - 9.4, die sich über die gesamte Breite des Transportsystems 1 erstrecken und jeweils beidendig an einem nicht dargestellten Maschinengestell gehalten sind, bilden zwei Führungsstangengruppen 10 und 11, die jeweils zwei Führungsstangen 9.1, 9.2 bzw. 9.3, 9.4 umfassen und die beidseitig von der Spindelanordnung 8 angeordnet sind, und zwar die Führungsstangengruppe 10 in Transportrichtung A vor und die Führungsstangengruppe 11 in Transportrichtung A nach der Spindelanordnung 8. Die Führungsstange 9.1 und 9.2 bzw. 9.3, 9.4 sind in den Führungsstangengruppen 10 und 11 jeweils in einer Achsrichtung senkrecht zur Transportebene des Transporteurs 1 übereinander angeordnet, und zwar derart, dass die Achsen der Führungsstangen 9.1, 9.2 der Führungsstangengruppe 10 in der senkrecht zur Transportebene orientierten Ebene E3 und die Achsen der Führungsstangen 9.3, 9.4 der Führungsstangengruppe 11 in der senkrecht zur Transportebene des Transporteurs 1 orientierten Ebene E4 angeordnet sind.

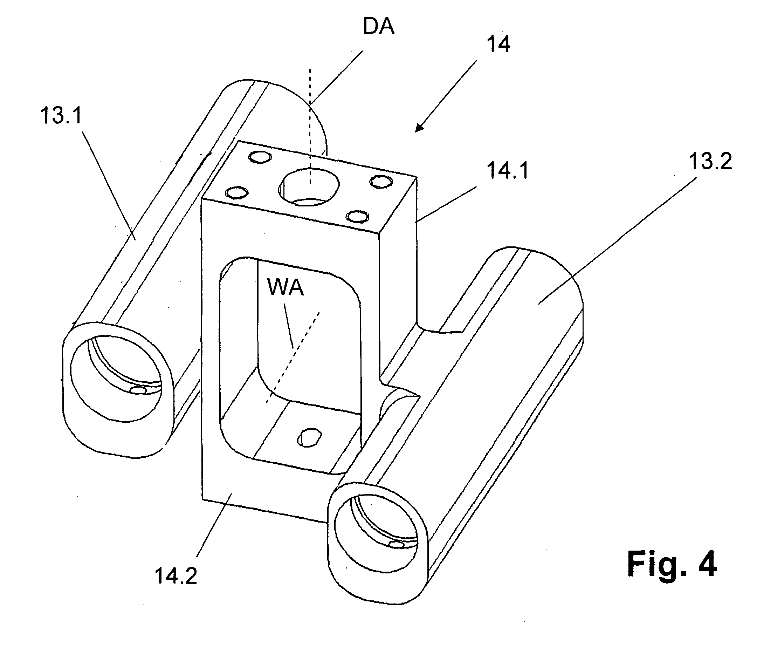

Die Verstellvorrichtung 6 umfasst weiterhin mehrere Einteil- oder Verstellelemente 12, an denen jeweils eine der Führungen 4 an ihrem oberen Bereich gehalten, sodass diese von dem betreffenden Einteil- oder Verstellelement 12 nach unten wegsteht. Die Einteil- oder Verstellelemente 12 sind für die Verstellung (Doppelpfeil B) der Führungen 4 in Führungsstangenlängsrichtung an den Führungsstangen 9.1 - 9.4 verschiebbar geführt, und zwar jeweils mit zwei Führungsabschnitten 13.1 und 13.2, die jeweils eine der Führungsstangen 9.1 - 9.4 umgreifen und an einem rahmenartigen Gehäuse 14, von diesem ohrenartig seitlich wegstehend vorgesehen sind. Das rahmenartige Gehäuse 14, welches in der Figur 4 in perspektivischer Einzeldarstellung wiedergegeben ist, ist an seinen beiden, in Achsrichtung der Achsen der Spindeln 7.1 - 7.6 sowie der Führungsstange 9.1 - 9.4 gegeneinander versetzten und in Ebenen senkrecht zu diesen Achsen orientierten Stirnseiten 14.1 und 14.2 offen.

Die Einteil- und Verstellelemente 12 sind jeweils zu einer parallel zu den Stirnseiten 14.1 und 14.2 des Gehäuses 14 angeordneten Mittelebene M2 spiegelsymmetrisch ausgebildet. Die beiden Führungsabschnitte 13.1 und 13.2 sind so ausgeführt, dass sie jeweils über beide Stirnseiten 14.1 und 14.2 des Gehäuses 14 mit einer axialen Länge vorstehen, die (axiale Länge) gleich oder etwas kleiner ist als der Abstand der beiden Stirnseiten 14.1 und 14.2. Weiterhin sind die Führungsabschnitte 13.1 und 13.2 an den beiden Längsseiten des rahmenartigen Gehäuses 14 in unterschiedlicher Höhe vorgesehen, sodass bei in Verstellrichtung B aufeinander folgenden Einteil- oder Verstellelementen 12 ein Einteil- oder Verstellelement mit seinem Führungsabschnitt 13.1 die Führungsstange 9.1 und mit seinem anderen Führungsabschnitt 13.2 die Führungsstange 9.4 umgreift und das auf dieses Einteil- oder Verstellelement 12 in Verstellrichtung B folgende Einteil- oder Verstellelement 12 mit seinem Führungsabschnitt 13.1 die Führungsstange 9.3 und mit seinem Führungsabschnitt 13.2 die Führungsstange 9.2 umgreift. Sämtliche Einteil- oder Verstellelemente 12 sind dabei aber identisch ausgebildet. Sie werden lediglich abwechselnd um 180° um eine bei der dargestellten Ausführungsform vertikale oder im Wesentlichen vertikale Achse DA (Figur 4) gedreht an den Führungsstangen 9.1 - 9.4 vorgesehen.

Durch die Verwendung von zwei Führungsabschnitten 13.1 und 13.2 für die Führung jedes Einteil- und Verstellelementes 12 sowie durch die relativ große axiale Länge dieser Führungsabschnitte ist eine zuverlässige und insbesondere auch gegen Verklemmen gesicherte Führung der Einteil- oder Verstellelemente 12 gewährleistet. Durch die verschränkte Anordnung der Führungsabschnitte 13.1 und 13.2 an dem jeweiligen Gehäuse 14, d.h. durch die unterschiedliche Höhenlage der Führungsabschnitte 13.1 und 13.2 sowie durch die abwechselnd um 180° um die Achse DA gedrehte Anordnung der Einteil- oder Verstellelemente 12 an den Führungsstangen 9.1 - 9.4 ist eine Einstellung der Einteil- oder Verstellelemente 12 möglich, in der benachbarte Einteil- oder Verstellelemente 12 mit ihrem Gehäuse 14 dicht aneinander anschließen, um so eine minimale Breite für die jeweilige Gasse 5 zu erreichen.

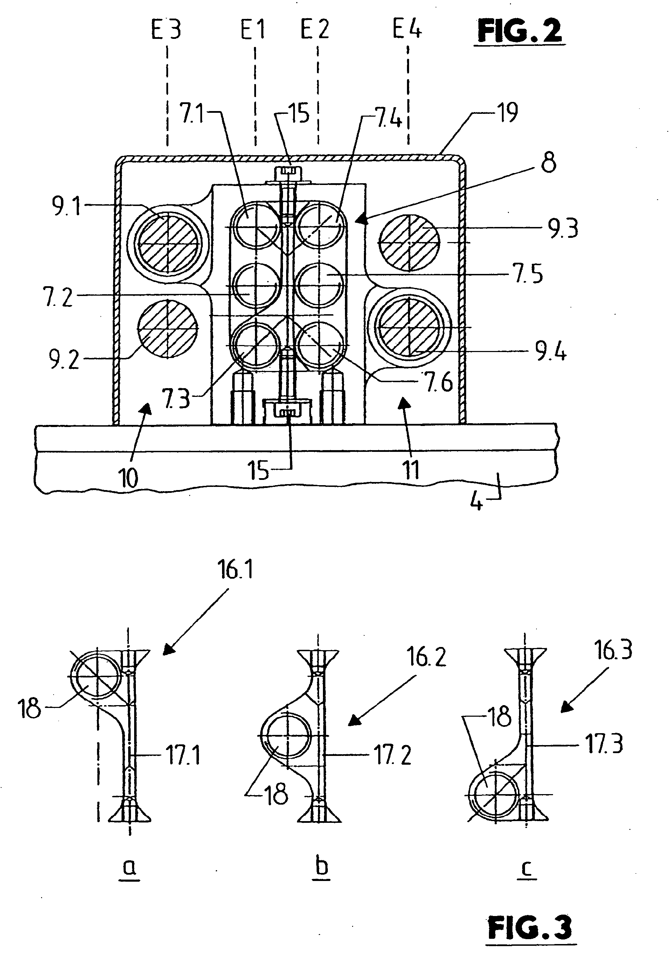

In dem Gehäuse 14 jedes Einteil- oder Verstellelementes 12 ist mit Hilfe von Klemmschrauben 15 eine Stellmutter gehalten, von denen in der Figur 3 in den Positionen a - c drei unterschiedliche Stellmuttern 16.1 - 16.3 dargestellt sind. Die Stellmuttern bestehen jeweils aus einem Stellmutterkörper 17.1 - 17.3 mit einer Gewindebohrung 18 und sind jeweils in zwei unterschiedlichen Ausführungen vorgesehen, die sich lediglich dadurch unterscheiden, dass bei einer Ausführungen der Stellmuttern 16.1 - 16.3 das Gewinde der Gewindebohrung 18 ein Rechtsgewinde und bei der anderen Ausführung der Stellmuttern 16.1 - 16.3 das Gewinde der Gewindebohrung 18 ein Linksgewinde ist.

Die Stellmutterkörper 17.1 - 17.6 sind im Wesentlichen leistenartig mit einem die jeweilige Gewindebohrung 18 aufweisenden Vorsprung derart ausgebildet, dass durch die Gewindebohrung 18 der jeweiligen mit einem Gehäuse 14 eines Einteil- oder Verstellelementes 12 montierten Stellmutter 16.1 - 16.6 nur eine der Spindeln 7.1 - 7.6 hindurchreicht, während die übrigen Spindeln durch das betreffende Gehäuse 14 bzw. durch das betreffende Einteil- oder Verstellelement 12 ohne Eingriff in eine Gewindebohrung 18 hindurchreichen. So ist beispielsweise in der Figur 1 die für das Rechtsgewinde der Gewindespindel 7.1 passende Stellmutter 16.1 in dem Gehäuse 14 des einen der beiden Einteil- oder Verstellelemente 12 und die entsprechende, für das Linksgewinde der Spindel 7.1 passende Stellmutter 16.1 in dem anderen der beiden Einteil- oder Verstellelemente 12 vorgesehen. In umgekehrter Weise ist es auch möglich, die für das Rechtsgewinde der Gewindespindel 7.4 passende Stellmutter 16.1 in dem einen Verstellelement bzw. dessen Gehäuse 14 und die für das Linksgewinde der Spindel 7.4 passende Stellmutter 16.1 in dem anderen Verstellelement 12 vorzusehen.

Die Verstellung weiterer Einteil- oder Verstellelemente 12 erfolgt dann über jeweils eine weitere Spindel 7.2 - 7.6, wobei für diese Spindeln und deren Gewinde die passenden Stellmuttern 16.1 - 16.3 in dem jeweiligen Gehäuse 14 vorgesehen werden, beispielsweise für die Spindeln 7.2 und 7.5 die Stellmuttern 16.2 mit Rechts- oder Linksgewinde und für die Spindeln 7.3 und 7.6 die Stellmuttern 16.3 mit Links- und Rechtsgewinde usw.

Unter Verwendung von sechs Spindeln 7.1 - 7.6 sind somit insgesamt sechs Paare von Einteil- oder Verstellelementen 12 und die an diesen gehaltenen Führungen 4 individuell durch Drehen der Spindeln 7.1 - 7.6 verstellbar, und zwar derart, dass bei diesem Verstellen die zugehörigen Einteil- oder Verstellelemente 12 jedes Paares spiegelsymmetrisch zur Mittelebene M1 des Transportsystems 1 bewegt werden, sodass bei insgesamt sechs Spindeln 7.1 - 7.6 insgesamt elf in ihrer Breite individuell einstellbare Gassen 5 für das Transportsystem 1 möglich sind.

Grundsätzlich besteht die Möglichkeit, die Verstellvorrichtung 6 so auszubilden, dass die einzelnen Spindeln 7.1 - 7.6 unabhängig voneinander manuell oder motorisch betätigt werden können. Bevorzugt sind die Spindeln aber über eine Getriebeanordnung antriebsmäßig miteinander verbunden, sodass über einen einzigen manuellen oder motorischen Antrieb sämtliche Spindeln 7.1 - 7.6 für ein Verstellen sämtlicher Einteil- oder Verstellelemente 12 betätigt werden.

Vorstehend wurde erwähnt, dass in Transportrichtung A gegeneinander versetzt mehrere Verstellvorrichtung 6 vorgesehen sind. Insbesondere dann, wenn die Spindeln 7.1 - 7.6 jeder Verstellvorrichtung 6 jeweils über ein Getriebe antriebsmäßig miteinander verbunden sind, besteht die Möglichkeit, die Mittel für die manuelle und/oder motorische Einstellung bzw. Betätigung der Spindeln 7.1 - 7.6 an einer Verstellvorrichtung 6 vorzusehen und die übrigen Verstellvorrichtungen dann antriebsmäßig mit dieser einen Verstellvorrichtung zu verbinden.

Mit 19 ist eine haubenartige Abdeckung bezeichnet, die das Gehäuse 14 und die Führungsabschnitte 13.1 - 13.4 des jeweiligen Einteil- oder Verstellelementes an der Oberseite sowie an den beiden sich in Verstellrichtung B erstreckenden Seiten abdeckt.

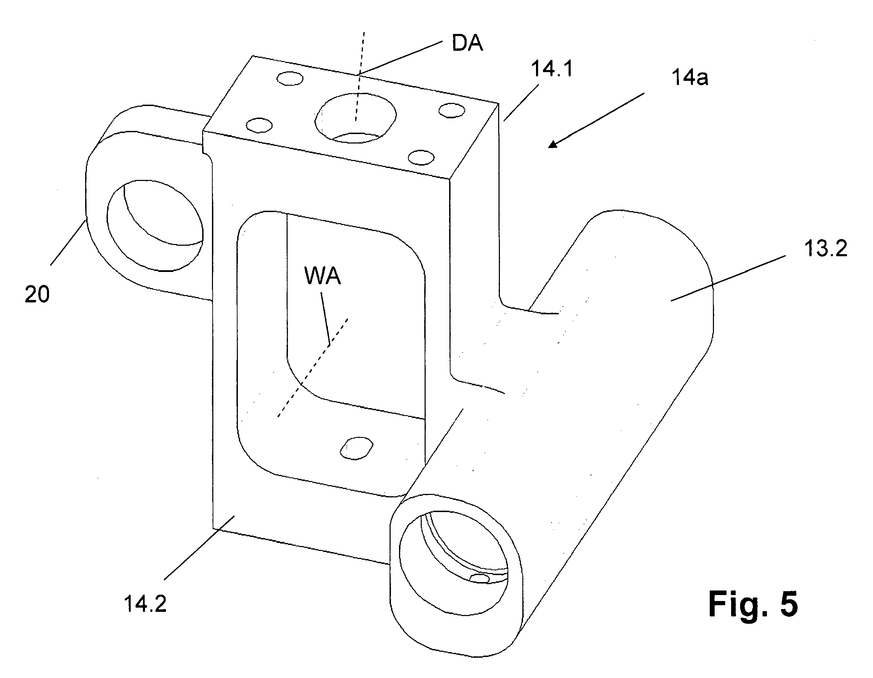

Die Figur 5 zeigt als weitere Ausführungsform ein rahmenartiges Gehäuse 14a, welches anstelle des Gehäuses 14 zusammen mit der jeweiligen im Gehäuse 14a montierten Stellmutter 16.1 - 16.3 als Einteil- oder Verstellelement 12 bei dem Transporteur 1 bzw. bei einer der dortigen Verstellvorrichtungen 6 verwendet werden kann. Das Gehäuse 14a unterscheidet sich von dem Gehäuse 14 im Wesentlichen nur dadurch, dass an diesem Gehäuse lediglich ein Führungsabschnitt, nämlich der Führungsabschnitt 13.2 vorgesehen ist, der bei einer der Darstellung der Figur 5 entsprechenden Einbaulage mit der unteren Führungsstange 9.4 zusammenwirkt. An der dem Führungsabschnitt 13.2 abgewandten anderen Seite des rahmenartigen Gehäuse 14a ist anstelle des Führungsabschnittes 13.1 ein axial verkürzter hülsenartiger Abschnitt 20 angeformt, dessen axiale Länge beispielsweise höchstens gleich oder kleiner ist als der Abstand der Gehäusestirnseite 14.1 und 14.2 und der bei einer der Darstellung der Figur 5 entsprechenden Einbaulage zur Drehsicherung des Gehäuses 14a und damit des von diesem Gehäuse gebildeten Einteil- oder Verstellelementes 12 an der oberen Führungsstange 9.1 geführt ist. Um trotz nur eines einzigen, tatsächlich als Führung dienenden Führungsabschnitts 13.2 eine zuverlässige Führung für die von dem Gehäuse 14a gebildete Einteil- und Verstelleinheit 12 zu erreichen, weist der Führungsabschnitt 13.2 bevorzugt eine im Vergleich zu den Führungsabschnitten 13.1 und 13.2 des Gehäuses 14 vergrößerte axiale Länge auf, d.h. eine axiale Länge die wenigstens gleich, vorzugsweise aber größer ist als der doppelte Abstand der beiden Gehäusestirnseiten 14.1 und 14.2.

Auch das Gehäuse 14a bzw. die dieses Gehäuse aufweisende Einteil- oder Verstelleinheit 12 wird so eingebaut, dass entlag den Führungsstangen 9.1 - 9.4 benachbarte Gehäuse 14a jeweils zumindest um die Achse DA um 180° gewendet sind, d.h. das Gehäuse 14a einer Einteil- oder Verstelleinheit 12 in der vorbeschriebenen Einbaulage mit seinem Führungsabschnitt 13.2 an der Führungsstange 9.4 und mit dem Abschnitt 20 an der Führungsstange 9.1 und die benachbarte Einteil- oder Verstelleinheit 12 bzw. deren Gehäuse 14a mit dem Führungsabschnitt 13.2 an der unteren Führungsstange 9.2 und mit dem Abschnitt 20 an der oberen Führungsstange 9.3 geführt ist.

Bevorzugt ist das Gehäuse 14a aber so ausgebildet, dass der Einbau dieses Gehäuses bzw. des mit dem Gehäuse jeweils realisierten Einteil- oder Verstellelementes 12 auch über Kopf, d.h. um 180° um eine parallel zu den Führungsstangen 9.1 - 9.4 orientierte Achse WA gewendet erfolgen kann, und zwar dann in der Weise, dass der Führungsabschnitt 13.2 wahlweise an der oberen Führungsstange 9.1 oder 9.3 und der Abschnitt 20 für die Drehsicherung wahlweise an der unteren Führungsstange 9.2 oder 9.4 geführt sind. Durch diesen Einbau ist es dann beispielsweise möglich, trotz der größeren axialen Länge des jeweiligen Führungsabschnittes 13.2 in Führungsstangenlängsrichtung aufeinander folgende Einteil- oder Verstellelemente 12 mit ihren Gehäusen 14a dicht aneinander anschließen können, um so eine möglichst kleine minimale Gassenbreite für die Gassen 5 zu ermöglichen. Weiterhin kann bei mehreren in Transportrichtung A aufeinander folgenden Verstellvorrichtungen 6 durch die von Verstellvorrichtung zu Verstellvorrichtung über Kopf gewendete Anordnung derjenigen Einteil- oder Verstellelementen 12 bzw. deren Gehäuse 14a, die ein und derselben Führung 4 zugeordnet sind, eine verbesserte Gassenbreiten-Einstellung erreicht werden.

Um die über Kopf gewendete, d.h. um die Achse WA jeweils um 180° gedrehte Anordnung der von den Gehäuses 14a gebildeten Einteil- und Verstelleinheiten 12 zu ermöglichen, ist jedes Gehäuse 14a an seiner Ober- und Unterseite jeweils mit Mitteln versehen, die die Befestigung der Führung 4 ermöglichen.

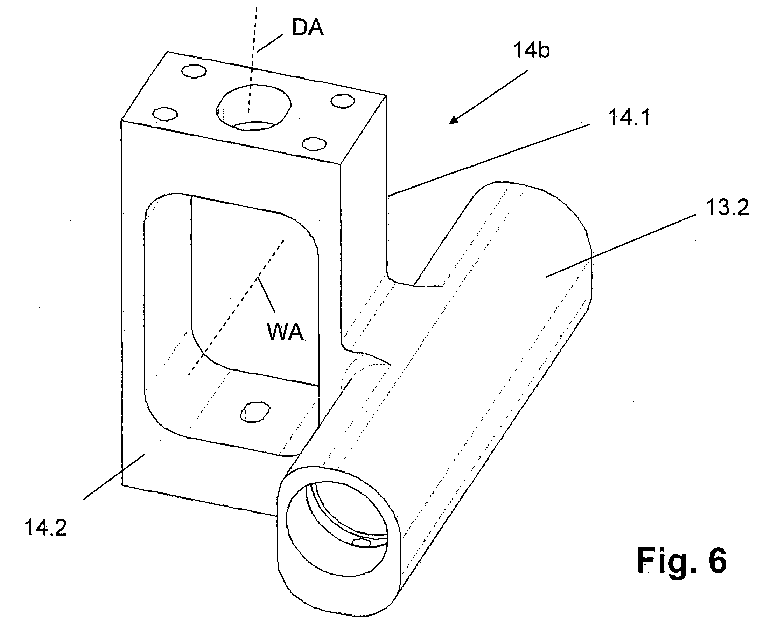

Die Figur 6 zeigt als weitere Ausführungsform ein Gehäuse 14b, welches sich von dem Gehäuse 14a dadurch unterscheidet, dass auch der Abschnitt 20 entfallen und am Gehäuse 14b lediglich ein Führungsabschnitt, nämlich lediglich der Führungsabschnitt 13.2 vorgesehen ist.

Ebenso wie das Gehäuse 14a ist auch das Gehäuse 14b für einen über Kopf um 180° gewendeten Einbau geeignet. Die Verdrehungssicherung wird bei dem Gehäuse 14b bzw. bei den mit derartigen Gehäusen realisierten Einteil- oder Verstellelementen 12 durch die jeweilige, mit der Verstellmutter 16.1 - 16.3 zusammenwirkende Gewindespindel 7.1 - 7.6 oder aber auch über die jeweilige Führung 4 bewirkt, die an mehreren in Transportrichtung A aufeinander folgenden Verstellvorrichtungen 6 bzw. an dortigen von Gehäusen 14b gebildeten Einteil- oder Verstelleinheiten 12 gehalten ist.

Die Erfindung wurde voranstehend an Ausführungsbeispielen beschrieben. Es versteht sich, dass Änderungen sowie Abwandlungen möglich sind, ohne dass dadurch der der Erfindung zugrundeliegende Erfindungsgedanke verlassen wird.

So wurde vorstehen davon ausgegangen, dass die Verstellvorrichtung 6 zum Verstellen der die Gassen 5 seitlich begrenzenden Führungen 4 dient. Selbstverständlich kann die Verstellvorrichtung 6 auch für eine seitliche, d.h. senkrecht zur Transportrichtung A orientierte Verstellung der Transportbänder 3 bzw. deren Führungen dienen, und zwar bei der Einstellung der Gassenbreite solcher Transporteure 1, bei denen die Transportebene jeder Gasse 5 von einem oder mehreren Transportbändem in der Weise gebildet ist, dass die Gassenbreite etwas größer ist als die Breite der von dem wenigstens einem Transportband gebildeten Transportfläche.

Weiterhin wurde vorstehend davon ausgegangen, dass die Spindeln 7.1 - 7.6 jeweils mit einem Rechtsgewinde und einem Linksgewinde ausgebildet sind. Grundsätzlich besteht die Möglichkeit, sämtliche Spindeln 7.1 - 7.6 jeweils durchgehend mit einer einzigen Gewindeart auszuführen, beispielsweise mit einem Rechtsgewinde und dann für jedes Paar von Einteil- oder Verstellelementen 12 zwei Spindeln 7.1 - 7.6 zu nutzen, die beim Verstellen z.B. über ein Getriebe gegenläufig gedreht werden. Bei dieser Ausbildung, bei der Stellmutter 16.1 - 16.3 mit nur einer Gewindeart an den Gewindebohrungen 18 vorgesehen sind, ist eine Verstellung von drei Paaren von Einteil- oder Verstellelementen 12 möglich, und zwar trotz vereinfachter Ausbildung der Spindeln 7.1 - 7.6 und unter Vermeidung von Rechts- und Linksgewinden.

### Bezugszeichenliste

- 1: Transporteur
- 2: Verpackung
- 3: Transportband
- 4: Führung
- 5: Gasse
- 6: Verstellvorrichtung
- 7.1 - 7.6: Spindel
- 8: Spindelanordnung
- 9.1 - 9.4: Führungsstange
- 10, 11: Führungsstangenanordnung
- 12: Einteil- oder Verstelleinheit
- 13.1, 13.2: Führungsabschnitt
- 14, 14a, 14b: Gehäuse
- 14.1, 14.2: Gehäusestirnseite
- 15: Klemmschraube
- 16.1 - 16.3: Verstellmutter
- 17.1 - 17.3: Stellmutterkörper
- 18: Gehäuse
- 19: Abdeckung
- 20: Abschnitt

- M1, M2: Mittelebene
- E1, E4: Ebene
- A: Transportrichtung
- B: Verstellrichtung

## Patentansprüche

1. Verstellvorrichtung zur Verwendung bei einem Transporteur zum Transportieren von Verpackungen (2) in einer Transportrichtung (A) mit wenigstens einem eine Transportfläche für die Verpackungen (2) bildenden Transportelement (3) sowie mit In einer Achsrichtung quer zur Transportrichtung (A) verstellbaren Funktionselementen (4), mit wenigstens einer Spindelanordnung (8) mit wenigstens zwei Spindeln (7.1 - 7.6), die mit ihren Achsen parallel zuelnander und quer zur Transportrichtung (A) orientiert sind, mit wenigstens zwei Einteil- oder Verstellelementen (12), von denen jedes mit einer Gewindebohrung in Eingriff mit einer Gewindespindel (7.1 - 7.6) steht, wobei die Einteil- oder Verstellelemente (12) oder deren Gehäuse (14, 14a, 14b) wenigstens eine Öffnung bilden, durch die die mit der Gewindebohrung des jeweiligen Einteil- oder Verstellelementes (12) nicht in Eingriff stehenden Gewindespindeln (7.1 - 7.6) hindurchgeführt sind, **dadurch gekennzeichnet, dass** die Einteil- oder Verstellelemente (12) jeweils an wenigstens einer Führungsstange (9.1 - 9.4) in Verstellrichtung (B) geführt sind, die (wenigstens eine Führungsstange) seitlich von der Spindelanordnung (8) angeordnet und mit ihrer Achse in Verstellrichtung (B) orientiert ist, wobei jedes Einteil- oder Verstellelement (12) an nur einer Führungsstange (9.1 - 9.4) oder an wenigstens zwei Führungsstangen (9.1 - 9.4), vorzugsweise an zwei beidseitig von der Spindelanordnun (B) angeordnete Führungsstangen (9.1 - 9.4) in Verstellrichtung (B) geführt ist.

2. Verstellvorrichtung nach Anspruch 1, **dadurch gekennzeichnet, dass** beidseitig von der Spindelanordnung (8) Führungsstangenanordnungen (10, 11) mit jeweils wenigstens zwei Führungsstangen (9.1 - 9.4) vorgesehen sind.

3. Verstellvorrichtung nach einem der vorhergehenden Ansprüche, **dadurch gekennzeichnet, dass** an den Einteil- oder Verstellelementen (12) oder an Gehäusen (14, 14a, 14b) dieser Elemente jeweils zumindest ein an der wenigstens einen Führungsstange (9.1 - 9.4) geführter Führungsabschnitt (13.1, 13.2) vorgesehen ist, dessen axiale Länge in Richtung der Achse der Führungsstangen (9.1 - 9.4) vorzugsweise größer ist als die Abmessung des Gehäuses (14, 14a, 1ab) in dieser Achsrichtung.

4. Verstellvorrichtung nach Anspruch 3, **dadurch gekennzeichnet, dass** an den Einteil- oder Verstellelementen (12) oder an deren Gehäusen (14) jeweils zumindest zwei an jeweils einer Führungsstange (9.1 - 9.4) geführte Führungsabschnitte (13.1, 13.2) vorgesehen sind.

5. Verstellvorrichtung nach Anspruch 3, **dadurch gekennzeichnet, dass** an den Einteil- oder Verstellelementen (12) oder an deren Gehäusen (14a, 14b) Jeweils nur ein an einer Führungsstange (9.1 - 9.4) geführter Führungsabschnitt (13.2) sowie ggs. noch ein weiterer lediglich zur Drehsicherung dienender und an einer weiteren Führungsstange (9.1 - 9.4) angreifender oder geführter Abschnitt (20) vorgesehen ist, der vorzugsweise eine im Vergleich zum Führungsabschnitt (13.2) stark reduzierte axiale Länge aufweist.

6. Verstellvorrichtung nach einem der vorhergehenden Ansprüche, **dadurch gekennzeichnet, dass** bei einer Führungsstangenanordnung (10, 11) mit wenigstens zwei, beispielsweise an einer gemeinsamen Seite oder an gegenüber liegenden Seiten der Spindelanordnung (8) vorgesehenen Führungsstangen (9.1, 9.2; 9.3, 9.4) von zwei in Verstellrichtung (B) aufeinander folgenden Einteil- oder Verstellelementen (12) ein Verstellelement (12) an der einen Führungsstange (9.1, 9.3) und das in Verstellrichtung benachbarte Einteil- oder Verstellelement (12) an der anderen Führungsstange (9.2, 9.4) der wenigstens einen Führungsstangenanordnung (10, 11) geführt ist.

7. Verstellvorrichtung nach einem der vorhergehenden Ansprüche, **dadurch gekennzeichnet, dass** bei zwei Gruppen von jeweils wenigstens zwei Führungsstangen (9.1 - 9.4) in Führungsstangenlängsrichtung aufeinander folgende, gleichartig ausgebildete Einteil- oder Verstellelemente (12) oder deren Gehäuse (14, 14a, 14b) jeweils um eine Achse (DA) senkrecht zur Längserstreckung der Führungsstangen (9.1 - 9.4) und/oder um eine Achse (WA) parallel zur Längserstreckung der Führungsstangen (9,1 - 9.4) um 180° gedreht bzw, gewendet an den Führungsstangen (9.1 - 9.4) geführt und/oder drehgesichert sind.

8. Verstellvorrichtung nach einem der vorhergehenden Ansprüche, **dadurch gekennzeichnet, dass** die Einteil- oder Verstellelemente (12) Paare solcher Elemente bilden, und dass die Elnteil- und Verstellelemente (12) jedes Paares durch Drehen der Gewindespindeln (7.1 - 7.6) unabhängig voneinander oder gemelnsam verslellber sind, wobei die Einteil- oder Verstellelemente jedes Verstellelementpaares durch Drehen der Gewindespindeln (7.1 - 7.6) vorzugsweise gegenläufig verstellbar sind.

9. Verstellvorrichtung nach einem der vorhergehenden Ansprüche, **dadurch gekennzeichnet, dass** die Einteil- oder Verstellelemente (12) jedes Verstellelementpaares mit ihren Muttergewindeabschnitten (18) an gegenläufigen Gewindeabschnitten ein und derselben Gewindespindel (7.1 - 7.6) oder an dem Gewinde jeweils einer eigenständigen Gewindespindel (7.1 -7.6) angreifen.

10. Verstellvorrichtung nach einem der vorhergehenden Ansprüche, **dadurch gekennzeichnet, dass** die Spindelanordnung (8) wenigstens vier Gewindespindein (7.1 - 7.6), vorzugsweise sechs Gewindespindeln (7.1 - 7.6) aufweist.

11. Verstellvorrichtung nach einem der vorhergehenden Ansprüche, **dadurch gekennzeichnet, dass** das Muttergewindestück der Einteil- oder Verstellelemente (12) jeweils von einer in einem Gehäuse (14, 14a, 14b) montierten und eine Gewindebohrung (18) aufweisenden Stellmutter (16.1 - 16.3) gebildet ist; wobei beispielsweise wenigstens zwei wahlweise in dem jeweiligen Gehäuse (14, 14a, 14b) der Einteil- oder Verstellelemente (12) montierbare Stellmuttern (16.1 - 16.3) vorgesehen sind, deren Gewinde oder Gewindeabschnitt (18) an die Lage der jeweils zugeordneten Gewindespindel (7.1 - 7.6) und/oder an die Art des Gewindes dieser Gewindespindel angepasst ist.

12. Verstellvorrichtung nach einem der vorhergehenden Ansprüche, **gekennzeichnet durch** ihre Ausbildung als Verstellvorrichtung zum Verstellen der Position oder Lage von seitlichen Führungen (4) an Transportstrecken oder Gassen (5).

13. Verstellvorrichtung **gekennzeichnet durch** ihre Ausbildung zum Verstellen von Transportelementen, beispielsweise Transportbändern (3) oder von Führungen für Transportelemente quer zur Transportrichtung (A).

## Claims

1. Adjusting device for use on a conveyor for transporting packages (2) in a transport direction (A), comprising at least one transport element (3) forming a transport surface for the packages (2) and further comprising functional elements (4) that can be adjusted in an axial direction transversely with respect to the transport direction (A), having at least one spindle assembly (8) with at least two spindles (7.1 - 7.6), the axes of which are oriented parallel to each other and transversely with respect to the transport direction (A), having at least two dividing or adjusting elements (12), each of which engages with a threaded spindle (7.1 - 7.6) by means of a threaded hole, wherein the dividing or adjusting elements (12) or the housing (14, 14a, 14b) thereof form at least one opening through which the threaded spindles (7.1 - 7.6) that are not in engagement with the threaded bore of the respective dividing or adjusting element (12) are passed, **characterised in that** the dividing or adjusting elements (12) are each guided in an adjustment direction (B) on at least one guide rod (9.1 - 9.4) which (at least one guide rod) is arranged to the side of the spindle assembly (8) and is oriented with its axis in the adjustment direction (B), wherein each dividing or adjusting element (12) is guided in the adjustment direction (B) on just one guide rod (9.1 - 9.4) or on at least two guide rods (9.1 - 9.4), preferably on two guide rods (9.1 - 9.4) arranged on either side of the spindle assembly (8).

2. Adjusting device according to claim 1, **characterised in that** guide rod assemblies (10, 11), each having at least two guide rods (9.1 - 9.4), are provided on either side of the spindle assembly (8).

3. Adjusting device according to any one of the preceding claims, **characterised in that** provided on the dividing or adjusting elements (12) or on housings (14, 14a, 14b) of these elements is in each case at least one guide portion (13.1, 13.2) which is guided on the at least one guide rod (9.1 - 9.4) and the axial length of which in the direction of the axis of the guide rods (9.1 - 9.4) is preferably greater than the size of the housing (14, 14a, 14b) in this axial direction.

4. Adjusting device according to claim 3, **characterised in that** provided on the dividing or adjusting elements (12) or on the housings (14) thereof are in each case at least two guide portions (13.1, 13.2) which are guided on in each case one guide rod (9.1 - 9.4).

5. Adjusting device according to claim 3, **characterised in that** provided on the dividing or adjusting elements (12) or on the housings (14a, 14b) thereof is in each case just one guide portion (13.2) which is guided on a guide rod (9.1 - 9.4) as well as optionally a further portion (20) which serves merely to prevent rotation and which acts on or is guided on a further guide rod (9.1 - 9.4), said portion preferably having an axial length that is greatly reduced in comparison to the guide portion (13.2).

6. Adjusting device according to any one of the preceding claims, **characterised in that**, in the case of a guide rod assembly (10, 11) having at least two guide rods (9.1, 9.2; 9.3, 9.4) which are provided for example on a common side or on opposite sides of the spindle assembly (8), of two dividing or adjusting elements (12) which succeed one another in the adjustment direction (B) one adjusting element (12) is guided on one guide rod (9.1, 9.3) and the dividing or adjusting element (12) adjacent thereto in the adjustment direction is guided on the other guide rod (9.2, 9.4) of the at least one guide rod assembly (10, 11).

7. Adjusting device according to any one of the preceding claims, **characterised in that**, in the case of two groups of in each case at least two guide rods (9.1 - 9.4), dividing or adjusting elements (12) which are of identical design and which succeed one another in the guide rod longitudinal direction, or the housing (14, 14a, 14b) thereof, are guided and/or rotationally secured on the guide rods (9.1 - 9.4) in each case in a manner rotated or turned through 180° about an axis (DA) perpendicular to the longitudinal extent of the guide rods (9.1 - 9.4) and/or about an axis (WA) parallel to the longitudinal extent of the guide rods (9.1 - 9.4).

8. Adjusting device according to any one of the preceding claims, **characterised in that** the dividing or adjusting elements (12) form pairs of such elements, and **in that** the dividing or adjusting elements (12) of each pair can be adjusted independently of one another or jointly by rotating the threaded spindles (7.1 - 7.6), wherein the dividing or adjusting elements of each adjusting element pair can be adjusted preferably in opposite directions by rotating the threaded spindles (7.1 - 7.6).

9. Adjusting device according to any one of the preceding claims, **characterised in that** the dividing or adjusting elements (12) of each adjusting element pair act with their female threaded portions (18) on oppositely threaded portions of one and the same threaded spindle (7.1 - 7.6) or on the thread of a separate threaded spindle (7.1 - 7.6) in each case.

10. Adjusting device according to any one of the preceding claims, **characterised in that** the spindle assembly (8) comprises at least four threaded spindles (7.1 - 7.6), preferably six threaded spindles (7.1 - 7.6).

11. Adjusting device according to any one of the preceding claims, **characterised in that** the female threaded piece of the dividing or adjusting elements (12) is formed in each case by an adjusting nut (16.1 - 16.3) which is mounted in a housing (14, 14a, 14b) and has a threaded bore (18), wherein for example at least two adjusting nuts (16.1 - 16.3) which can be selectively mounted in the respective housing (14, 14a, 14b) of the dividing or adjusting elements (12) are provided, the thread or threaded portion (18) of said nuts being adapted to the position of the respectively associated threaded spindle (7.1 - 7.6) and/or to the type of thread of said threaded spindle.

12. Adjusting device according to any one of the preceding claims, **characterised by** being designed as an adjusting device for adjusting the position or location of lateral guides (4) on transport paths or lanes (5).

13. Adjusting device, **characterised by** being designed to adjust transport elements, for example conveyor belts (3), or guides for transport elements transversely to the transport direction (A).

## Revendications

1. Dispositif de déplacement destiné à être utilisé avec un transporteur aux fins de transporter des emballages (2) dans une direction de transport (A) comportant au moins un élément de transport (3) formant une surface de transport destinée aux emballages (2) ainsi que des éléments fonctionnels (4) pouvant être déplacés dans une direction axiale de manière transversale par rapport à la direction de transport (A), comportant au moins un ensemble de broches (8) doté d'au moins deux broches (7.1 - 7.6), lesquelles sont orientées avec leurs axes de manière parallèle les unes par rapport aux autres et de manière transversale par rapport à la direction de transport (A), comportant au moins deux éléments de répartition ou de déplacement (12), parmi lesquels chaque élément est en prise avec une broche filetée (7.1 - 7.6) par un alésage fileté, sachant que les éléments de répartition ou de déplacement (12) ou leurs boîtiers (14, 14a, 14b) forment au moins une ouverture, à travers laquelle les broches filetées (7.1 - 7.6) ne se trouvant pas en prise avec l'alésage fileté de chaque élément de répartition ou de déplacement (12) sont guidées, **caractérisé en ce que** les éléments de répartition ou de déplacement (12) sont guidés respectivement au niveau au moins d'une tige de guidage (9.1 - 9.4) dans une direction de déplacement (B), **en ce que** la tige de guidage au moins au nombre de une est disposée sur le côté de l'ensemble de broches (8) et est orientée avec son axe dans la direction de déplacement (B), sachant que chaque élément de répartition ou de déplacement (12) est guidé au niveau uniquement d'une tige de guidage (9.1 - 9.4) ou au niveau au moins de deux tiges de guidage (9.1 - 9.4), de préférence au niveau de deux tiges de guidage (9.1 -9.4) disposées des deux côtés de l'ensemble de broches (8) dans la direction de déplacement (B).

2. Dispositif de déplacement selon la revendication 1, **caractérisé en ce que** des deux côtés de l'ensemble de broches (8) sont prévus des ensembles de tiges de guidage (10, 11) dotés respectivement d'au moins deux tiges de guidage (9.1 - 9.4).

3. Dispositif de déplacement selon l'une quelconque des revendications précédentes, **caractérisé en ce que** respectivement au moins une section de guidage (13.1 - 13.2) guidée au niveau de la tige de guidage (9.1 - 9.4) au moins au nombre de une est prévue au niveau des éléments de répartition ou de déplacement (12) ou au niveau des boîtiers (14, 14a, 14b) desdits éléments, la longueur axiale de ladite section de guidage étant de préférence plus grande dans la direction de l'axe des tiges de guidage (9.1 - 9.4) que la dimension du boîtier (14, 14a, 14b) dans ladite direction axiale.

4. Dispositif de déplacement selon la revendication 3, **caractérisé en ce que** respectivement au moins deux sections de guidage (13.1, 13.2) guidées au niveau respectivement d'une tige de guidage (9.1 - 9.4) sont prévues au niveau des éléments de répartition ou des éléments de déplacement (12) ou au niveau de leurs boîtiers (14).

5. Dispositif de déplacement selon la revendication 3, **caractérisé en ce que** respectivement uniquement une section de guidage (13.2) guidée au niveau d'une tige de guidage (9.1 - 9.4) ainsi qu'éventuellement une autre section (20) servant uniquement au blocage en rotation et engagée ou guidée au niveau d'une autre tige de guidage (9.1 - 9.4) sont prévues au niveau des éléments de répartition ou de déplacement (12) ou au niveau de leurs boîtiers (14a, 14b), ladite section (20) présente de préférence une longueur axiale fortement réduite par rapport à la section de guidage (13.2).

6. Dispositif de déplacement selon l'une quelconque des revendications précédentes, **caractérisé en ce que** dans le cas d'un ensemble de tiges de guidage (10, 11) doté d'au moins deux tiges de guidage (9.1, 9.2 ; 9.3, 9.4) prévues par exemple au niveau d'un côté commun ou au niveau de côtés opposés de l'ensemble de broches (8), deux éléments de répartition ou de déplacement (12) se suivant dans la direction de déplacement (B) guident un élément de déplacement (12) au niveau d'une des tiges de guidage (9.1, 9.3) et l'élément de répartition ou de déplacement (12) adjacent dans la direction de déplacement au niveau de l'autre tige de guidage (9.2, 9.4) de l'ensemble de tiges de guidage (10, 11) au moins au nombre de un.

7. Dispositif de déplacement selon l'une quelconque des revendications précédentes, **caractérisé en ce que** dans le cas de deux groupes de respectivement au moins deux tiges de guidage (9.1 - 9.4), des éléments de répartition ou de déplacement (12) réalisés de la même manière, se suivant dans la direction longitudinale des tiges de guidage ou leurs boîtiers (14, 14a, 14b) sont guidés et/ou bloqués en rotation au niveau des tiges de guidage (9.1 - 9.4) en étant tournés de 180° respectivement autour d'un axe (DA) de manière perpendiculaire par rapport à l'extension longitudinale des tiges de guidage (9.1 - 9.4) et/ou autour d'un axe (WA) de manière parallèle par rapport à l'extension longitudinale des tiges de guidage (9.1 - 9.4).

8. Dispositif de déplacement selon l'une quelconque des revendications précédentes, **caractérisé en ce que** les éléments de répartition ou de déplacement (12) forment des paires d'éléments de ce type, et **en ce que** les éléments de répartition ou de déplacement (12) de chaque paire peuvent être déplacés par rotation des broches filetées (7.1 - 7.6) indépendamment les uns des autres ou ensemble, sachant que les éléments de répartition ou de déplacement de chaque paire d'éléments de déplacement peuvent être déplacés par rotation des broches filetées (7.1 - 7.6) de préférence dans le sens contraire.

9. Dispositif de déplacement selon l'une quelconque des revendications précédentes, **caractérisé en ce que** les éléments de répartition ou de déplacement (12) de chaque paire de déplacement viennent en prise par leurs sections de filet femelle (18) au niveau des sections filetées opposées d'une seule et même broche filetée (7.1 - 7.6) ou au niveau du filetage respectivement d'une broche filetée (7.1 - 7.6) indépendante.

10. Dispositif de déplacement selon l'une quelconque des revendications précédentes, **caractérisé en ce que** l'ensemble de broches (8) présente au moins quatre broches filetées (7.1 - 7.6), de préférence six broches filetées (7.1 - 7.6).

11. Dispositif de déplacement selon l'une quelconque des revendications précédentes, **caractérisé en ce que** la pièce de filet femelle des éléments de répartition ou de déplacement (12) est formée respectivement par un écrou de réglage (16.1 - 16.3) monté dans un boîtier (14, 14a, 14b) et présentant un alésage fileté (18), sachant par exemple qu'au moins deux écrous de réglage (16.1 - 16.3) pouvant être montés au choix dans le boîtier respectif (14, 14a, 14b) des éléments de répartition ou de déplacement (12) sont prévus, dont le filetage ou la section filetée (18) est adapté(e) à la position des broches filetées (7.1 - 7.6) respectivement associées et/ou au type du filetage desdites broches filetées.

12. Dispositif de déplacement selon l'une quelconque des revendications précédentes, **caractérisé par** sa réalisation en tant que dispositif de déplacement servant à déplacer la position ou l'emplacement de guidages (4) latéraux au niveau de voies de transport ou d'allées (5).

13. Dispositif de déplacement, **caractérisé par** sa configuration servant à déplacer des éléments de transport, par exemple des bandes de transport (3) ou des guidages pour des éléments de transport de manière transversale par rapport à la direction de transport (A).
